(19) **Europäisches Patentamt** / **European Patent Office** / **Office européen des brevets**

(11) **EP 1 672 343 B1**

(12) **EUROPÄISCHE PATENTSCHRIFT**

(45) Veröffentlichungstag und Bekanntmachung des Hinweises auf die Patenterteilung:
**29.04.2009 Patentblatt 2009/18**

(51) Int Cl.:
***G01J 5/60*** *(2006.01)*

(21) Anmeldenummer: **05026131.2**

(22) Anmeldetag: **30.11.2005**

(54) **Verfahren und Vorrichtung zur Bestimmung der Kolbentemperatur von Hochdruck-Entladungslampen**

Method and apparatus for determining the bulb temperature of high pressure discharge lamps

Méthod et appareil pour la détermination de la température de l'ampoule de lampes à décharge à haute pression

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.12.2004 DE 102004060592**

(43) Veröffentlichungstag der Anmeldung:
**21.06.2006 Patentblatt 2006/25**

(73) Patentinhaber: **Osram Gesellschaft mit beschränkter Haftung**
**81543 München (DE)**

(72) Erfinder: **Rehn, Henning, Dr.**
**13437 Berlin (DE)**

(74) Vertreter: **Raiser, Franz**
**Osram GmbH**
**Postfach 22 16 34**
**80506 München (DE)**

(56) Entgegenhaltungen:
**DE-A1- 4 013 422        GB-A- 1 265 417**

## Beschreibung

### Technisches Gebiet

Die vorliegende Erfindung betrifft ein Verfahren zur Bestimmung der Kolbentemperatur von Hochdruck-Entladungslampen gemäß Patentanspruch 1.

### Stand der Technik

Hochdruck-Entladungslampen, beispielsweise Quecksilber- Hochdruck-Entladungslampen, werden heute in diversen Anwendungsbereichen eingesetzt, etwa in Projektoren.

Dabei ist es wichtig, die Temperatur des Lampenkolbens mit einem relativ engen Toleranzbereich, vorzugsweise $\pm 50$ K, auf eine optimale Betriebstemperatur einzustellen. Da oberhalb dieses Temperaturbereichs die Lampe schnell entglasen würde, unterhalb des Temperaturbereichs die Wirksamkeit des Kreisprozesses nicht mehr gegeben wäre, verringert eine zu hohe oder zu niedrige Temperatur die Lebensdauer. Des Weiteren kann eine zu hohe Lampentemperatur mit der Lampe verbundene Geräte und Elektronik beeinträchtigen.

Hierzu ist es grundsätzlich bekannt, die Temperatur des Kolbens zu bestimmen und die Betriebstemperatur durch Einstellung einer Kühlung im oben genannten Temperaturbereich zu halten.

Zur Bestimmung der Temperatur des Kolbens sind mehrere Verfahren bekannt.

Zum einen können Thermoelemente auf der Oberfläche des Kolbens befestigt werden. Dabei bestehen jedoch die üblichen Probleme bei der Verwendung von Thermoelementen. Beispielsweise können sich die aufgekitteten Elemente vom Kolben lösen oder liefern in bestimmten Konfigurationen falsche Werte. Zudem erfordern solche Thermoelemente zusätzlichen Montageaufwand und elektrische Verdrahtung.

Eine weitere Möglichkeit besteht darin, die Brennspannung zu bestimmen und hieraus mithilfe eines bekannten Zusammenhanges zwischen Brennspannung und Temperatur diese zu ermitteln. Dieses Verfahren ist jedoch aufgrund des je nach Betriebszustands variablen Zusammenhangs sehr ungenau.

Zur Vermeidung oben genannter Nachteile ist es daher heute üblich, mittels Pyrometer oder Infrarot-Kameras die Temperatur des Kolbens zu messen. Diese Verfahren erfordern jedoch eine separate optische Verbindung zum Kolben, d.h. alle den Kolben umgebenden Gehäuse (bspw. Reflektor, Lampenhaus, Projektorgehäuse) müssen entsprechende Bohrungen aufweisen, was konstruktiv nicht immer möglich ist. Des Weiteren besteht die Gefahr von Fehlern durch Vignettierung.

Die Schrift DE4013422 offenbart ein Verfahren zur Konstanthaltung der Farbtemperatur einer Lampe in einem Remissionsmessgerät. Dazu werden die Strahlungsleistungen der Lampe bei zwei unterschiedlichen Wellenlängen gemessen und der Quotient beider Messwerte zur Bildung eines Regelsignals herangezogen.

Die Schrift GB1265417 offenbart ein Verfahren zur Bestimmung der <u>Farbtemperatur</u> eines Festkörpers auf der Basis des Quotienten der Strahlungsleistungen in zwei unterschiedlichen Wellenlängenbereichen. Dazu wird jeweils die von dem Festkörper in zwei unterschiedlichen Wellenlängenbereichen emittierte Temperaturstrahlung photoelektrisch gemessen. Außerdem werden die Strahlungsleistungen mit Hilfe eines Abschwächers soweit abgeschwächt, bis die Strahlungsleistung in einem der Wellenlängenbereiche einen vorgegebenen Wert annimmt. Die in dem anderen Wellenlängenbereich gemessene Strahlungsleistung ist dann ein direktes Maß für den Quotienten und damit die Farbtemperatur des Temperaturstrahlers.

### Darstellung der Erfindung

Der Erfindung liegt die Aufgabe zugrunde, ein Verfahren bzw. eine Vorrichtung zur Bestimmung der Kolbentemperatur von Hochdruck-Entladungslampen zur Verfügung zu stellen, das bzw. die keinen zusätzlichen optischen Zugang zum Kolben erfordert.

Diese Aufgabe wird erfindungsgemäß durch die Merkmale des Anspruchs 1 bzw. 14 gelöst. Besonders vorteilhafte Ausführungen der Erfindung sind in den abhängigen Ansprüchen beschrieben.

Ein Verfahren zur Bestimmung der Kolbentemperatur von Hochdruck-Entladungslampen umfasst folgende Schritte: Ermitteln einer ersten spektralen Strahlungsleistung bei einer ersten Wellenlänge; Ermitteln einer zweiten spektralen Strahlungsleistung bei einer zweiten, von der ersten verschiedenen Wellenlänge; Bestimmen des Quotienten aus erster und zweiter Strahlungsleistung; und Bestimmen der Temperatur des Kolbens auf Basis dieses Quotienten.

Das Verfahren beruht auf der Erkenntnis, dass sich bei höherer Temperatur entsprechend der Gasgesetze auch der Druck des Gases im Kolben erhöht. Bei höherem Druck im Kolben wiederum sinkt die spektrale Strahlungsleistung $M_p$ im Bereich der Hauptlinien, d.h. der Spektrallinien des bzw. der Gase, mit denen der Lampenkolben gefüllt ist, während die spektrale Strahlungsleistung $M_c$ im Bereich des Untergrundes bzw. Kontinuums ansteigt. Somit hängt der Quotient $\beta = M_P / M_c$ dieser beiden Strahlungsleistungen direkt von der Temperatur des Gases im Kolben und damit der Temperatur des Kolbens selbst ab, die daher aus genanntem Quotienten bestimmt werden kann.

Ein solches Verfahren erfordert nur die Messung der spektralen Strahlungsleistung. Diese kann auch außerhalb eines Lampengehäuses stattfinden, beispielsweise im Streulicht (beispielsweise aus dem Lichtmischstab eines Projektors oder dem Schaft des Kolbens) oder sogar im durch einen Reflektor dringenden Restlicht. Somit ist keine separate optische Verbindung zum Kolben notwendig. Vorteilhafterweise findet die Messung im Nutzlicht der Lampe statt.

Das erfindungsgemäße Verfahren ist hinreichend genau. In Versuchen hat sich herausgestellt, dass eine Temperaturbestimmung mit einer Toleranz von $\pm 20$ K möglich ist, so dass übliche Toleranzbereiche in der Regelung eingehalten werden können.

Weiters erfordert das erfindungsgemäße Verfahren keine baulichen Veränderungen in Gehäusen, Reflektoren o.ä., die den Kolben umgeben. Ebenso sind keine zusätzlichen und anfälligen Bauteile wie Thermoelemente notwendig.

Vorteilhafterweise kann die erfindungsgemäß bestimmte Temperatur in einer Temperaturregelung verwendet werden. Hierzu wird allgemein eine Kolben-Soll-Temperatur ($T_{Soll}$) vorgegeben, die Kolben-Ist-Temperatur ($T$) mittels eines Verfahrens nach der vorliegenden Erfindung bestimmt und anschließend wenigstens ein Betriebsparameter der Hochdruck-Entladungslampe so angesteuert, dass sich die Kolben-Ist-Temperatur der Kolben-Soll-Temperatur annähert. Die Rückführung, der Regelalgorithmus und die Stellgrößen können dabei nach einem in der Kybernetik bekannten Stand der Technik erfolgen, beispielsweise als PID-Regelung, Fuzzy-Regelung oder modellgestützte Feedforward- oder Feedback-Regelung. Insbesondere können in Abhängigkeit von der so bestimmten Temperatur elektrische Leistung und/oder Kühlung der Lampe geregelt werden.

Bevorzugt liegt die erste Wellenlänge im Bereich der Hauptlinien, bei Quecksilber-Hochdruckentladungslampen beispielsweise im Bereich von 539 nm bis 559 nm oder 568 nm bis 588 nm.

Vorteilhafterweise liegt die zweite Wellenlänge im Bereich des Untergrundes, bei Quecksilber-Hochdruckentladungslampen beispielsweise im Bereich von 470 nm bis 530 nm, insbesondere 470 nm bis 490 nm.

Anstelle "scharfer" spektraler Strahlungsleistung $M(\lambda)$ bei einer Wellenlänge $\lambda$ können vorteilhaft mittlere spektrale Strahlungsleistungen verwendet werden, die beispielsweise gegeben sind durch

$$\overline{M} = \int_{\lambda-\Lambda\lambda}^{\lambda+\Lambda\lambda} M(\lambda)d\lambda \qquad (1).$$

Dies ermöglicht, auch einfachere Spektrometer oder Zwei-Wellenlängen-Sensoren zur Ermittlung der Strahlungsleistung zu verwenden.

Umfangreiche Untersuchungen der Anmelderin haben ergeben, dass der Quotient $\beta = M_p / M_c$ der beiden spektralen Strahlungsleistungen folgender Gleichung gehorcht:

$$\beta(T) = \beta_0 \left[ 1 + \exp\left( \frac{T_C - R \cdot P - T}{T_0} \right) \right] \qquad (2)$$

wobei $\beta_0$, $T_C$, $R$ und $T_0$ lampenspezifische Konstanten, $P$ die elektrische Leistung und $T$ die Temperatur des Kolbens bezeichnet.

Werden diese Konstanten für eine bestimmte Lampe ermittelt, so ist durch Messung der spektralen Strahlungsleistung und der elektrischen Leistung direkt die Bestimmung der Temperatur möglich.

Jedoch hängt insbesondere die Konstante $\beta_0$ von einer Vielzahl von Faktoren ab, unter anderem von dem Fülldruck der individuellen Lampe und den spektralen Eigenschaften des Meßpfades, die beispielsweise durch eine Reflektorbeschichtung, Projektoroptik oder ähnlichem bestimmt werden. Um diese Abhängigkeiten zu eliminieren, wird gemäß einer bevorzugten Ausführung der vorliegenden Erfindung ein zweiter Quotient bei einer zweiten Temperatur gemessen. Division der so erhaltenen zwei Quotienten eliminiert vorteilhaft die Konstante $\beta_0$.

Hierzu umfasst das Verfahren in einer bevorzugten Ausführung die weiteren Schritte: Ermitteln einer dritten spektralen Strahlungsleistung bei der ersten Wellenlänge und der zweiten Temperatur, die sich von derjenigen unterscheidet, bei der die erste spektralen Strahlungsleistung ermittelt wird; Ermitteln einer vierten spektralen Strahlungsleistung bei der zweiten Wellenlänge und der zweiten Temperatur; Bestimmen des Quotienten aus dritter und vierter Strahlungsleistung; und Ermitteln der Temperatur des Kolbens auf Basis des Quotienten aus dem aus der ersten spektralen Strahlungsleistung ermittelten Quotienten und dem aus der dritten spektralen Strahlungsleistung ermittelten Quotienten.

Auch hier ist es vorteilhaft, wenn die erste, zweite, dritte und vierte spektrale Strahlungsleistung eine mittlere spektrale Strahlungsleistung ist.

Wie vorstehend erläutert, eliminiert die Bestimmung von zwei Koeffizienten die Konstante $\beta_0$, so dass sich folgende Gleichung ergibt:

$$\frac{\beta_2}{\beta} = \frac{1 + \exp\left(\dfrac{T_C - R \cdot P_2 - T_2}{T_0}\right)}{1 + \exp\left(\dfrac{T_C - R \cdot P - T}{T_0}\right)} \qquad (3)$$

wobei $T_C$, $R$ und $T_0$ lampenspezifische Konstanten, P die elektrische Leistung bei der zu ermittelnden Temperatur (T), $P_2$ die elektrische Leistung bei der zweiten Temperatur ($T_2$) und $\beta$ bzw. $\beta_2$ den Quotienten der Strahlungsleistungen bezeichnet. Ausgehend von dieser Gleichung ergeben sich zwei Varianten der Temperaturbestimmung, die in den Ausführungsbeispielen näher erläutert sind.

Eine erfindungsgemäße Vorrichtung ist dazu eingerichtet, eines der oben dargestellten Verfahren zur Bestimmung bzw. zur Regelung der Kolbentemperatur durchzuführen. Hierzu kann die Vorrichtung einen oder mehrere programmierbare oder fest verdrahtete Computer, Mikrocontroller oder dergleichen umfassen.

**Bevorzugte Ausführungen der Erfindung**

Exemplarisch soll die Temperatur einer Hg-Hochdruck-Entladungslampe in einem Projektor bestimmt werden. Der Lampenkolben ist in einem Lampenhaus angeordnet, das seinerseits in dem Projektor enthalten ist. Mittels Reflektor, Lichtmischstab und Projektoroptik wird das Nutzlicht der Lampe in an sich bekannter Weise aus dem Projektor abgestrahlt.

Nach einer ersten Ausführung der vorliegenden Erfindung werden bei einer ersten Wellenlänge $\lambda_P$ von 578 nm und einer zweiten Wellenlänge $\lambda_c$ von 480 nm mittlere erste und zweite spektrale Strahlungsleistungen $M_P$ bzw. $M_c$ ermittelt. Hierzu wird beispielsweise das Nutzlicht, das Streulicht aus dem Lichtmischstab oder das durch den Reflektor dringende Restlicht von einem Spektrometer gemessen. Gleichermaßen kann dieses Licht durch entsprechende Bandpaßfilter so gefiltert werden, dass nur noch Licht im Bereich der genannten Wellenlängen durchtritt. Dann ist es mittels eines einfachen Sensors möglich, die Strahlungsleistung bei der jeweiligen Wellenlänge zu erfassen.

Gemäß der ersten Ausführung der vorliegenden Erfindung werden durch mehrere Messungen der tatsächlichen Kolbentemperatur- beispielsweise mittels Pyrometer - und elektrischen Leistung sowie Ermittlung der zugehörigen Strahlungsleistungen bei verschiedenen Temperaturen die Konstanten $\beta_0$, $T_c$, $R$ und $T_0$ bestimmt. Anschließend ist es - bei unverändertem Meßaufbau und damit unveränderten Konstanten - möglich, mittels Ermittlung des Quotienten aus erster und zweiter Strahlungsleistung die jeweilige Temperatur der Lampe zu bestimmen.

Da jedoch die, Konstante $\beta_0$ von den spektralen Eigenschaften des Meßpfades abhängt, wäre eine solche Konstantenbestimmung für jede neue Anordnung des Spektrometers notwendig.

Daher wird gemäß einer zweiten Ausführung der vorliegenden Erfindung der Quotient bei zwei verschiedenen Temperaturen der Lampe bestimmt und hieraus die Lampentemperatur ermittelt. Durch die zweimalige Ermittlung des Quotienten wird der Einfluss des Meßpfades eliminiert.

Hierzu wird die elektrische Leistung $P = P_2$ bei beiden Messungen konstant gehalten. Ohne Kühlung ist die Temperatur $T_2$ bei Lampen desselben Typs im wesentlichen gleich und kann vorab, beispielsweise mittels Pyrometer, ermittelt werden.

Damit lässt sich die Temperatur T bei anschließender Kühlung aus Gleichung (3) bestimmen, i.e. unabhängig vom Faktor $\beta_0$ in Gleichung (2) und damit unabhängig vom Messpfad, solange die Messung aller vier Strahlungsleistungen unter denselben Bedingungen erfolgt.

Jedoch ist hierzu die Kenntnis der zweiten Temperatur $T_2$ notwendig. Da es unter Umständen nachteilig ist, wie in der zweiten Ausführung die Lampe zunächst ohne Kühlung zu betreiben, um eine an sich bekannte zweite Temperatur $T_2$ einzustellen und den zugehörigen Quotienten zu ermitteln, wird gemäß einer dritten Ausführung der vorliegenden Erfindung folgende Formel verwendet, die die Anmelderin durch umfangreiche Untersuchungen ermittelt hat:

$$(T_2 - T) \approx (P_2 - P)\frac{R_C}{1 + 4cR_C \cdot T^3} \qquad (4)$$

wobei $R_c$ und c für einen Lampentyp spezifische Parameter sind.

Gemäß der dritten Ausführung der vorliegenden Erfindung ermittelt man daher, beispielsweise unter konstanter Kühlung der Lampe, bei zwei verschiedenen elektrischen Leistungen P und $P_2$ die jeweiligen spektralen Strahlungsleistungen $M_P(P)$, $M_P(P_2)$, $M_c(P)$ bzw. $M_C(P_2)$ bei der ersten bzw. zweiten Wellenlänge $\lambda_p$, $\lambda_c$. Aus diesen bestimmt man die zugehörigen Quotienten $\beta = M_P(P) / M_c(P)$ bzw. $\beta_2 = M_P(P_2) / M_C(P_2)$ der Strahlungsleistungen bei erster und zweiter Wellenlänge. Mit den so gefundenen Werten für P, P2, $\beta$ und $\beta_2$ sowie den vorab zu ermittelnden Konstanten c, $R_c$, $T_c$, R und $T_0$ können aus dem Gleichungssystem der oben gegebenen Gleichungen (3) und (4) - vorteilhafterweise numerisch - die Temperaturen T und $T_2$ bestimmt werden.

Im Gegensatz zur zweiten Ausführung ist somit keine bekannte zweite Temperatur als Referenzwert nötig. Gleichwohl ist die Bestimmung unabhängig von der Konstanten $\beta_0$, i.e. dem Messpfad. Es ist lediglich erforderlich, dass alle vier spektralen Strahlungsleistungen bei gleichen Bedingungen gemessen werden.

Zusammenfassend nutzt die vorliegende Erfindung die Erkenntnis, dass sich in Abhängigkeit von der Temperatur des Lampenkolbens das Verhältnis, i.e. der Quotient der spektralen Strahlungsleistungen zwischen Hauptlinien und Untergrund verändert, i.e. die Strahlungsleistung im Bereich der Hauptlinie (beispielsweise der Hg-Linie bei Hg-Hochdruck-Entladungslampen) geringer und diejenige des Kontinuums größer wird. Dieses Verhältnis gehorcht einem von der Anmelderin gefundenen Zusammenhang (Gleichung (3)) und kann dazu verwendet werden, durch Messung der Strahlungsleistungen die Temperatur des Kolbens zu bestimmen.

Um von den spektralen Eigenschaften des Meßpfades unabhängig zu sein, wird in vorteilhaften Ausführungen der vorliegenden Erfindung das Verhältnis bei zwei verschiedenen Temperaturen bestimmt. Ist eine dieser Temperaturen als Referenzwert bekannt, kann aus dem Verhältnis beider Quotienten die andere Temperatur bestimmt werden. Ist keine der beiden Temperaturen bekannt, so kann ein empirisch gefundener Zusammenhang (Gleichung (4)) zwischen den beiden Temperaturen und den zugehörigen elektrischen Leistungen ausgenutzt werden, um aus dem entsprechenden Gleichungssystem beide Temperaturen zu bestimmen.

**Patentansprüche**

1. Verfahren zur Bestimmung der Kolbentemperatur (T) von Hochdruck-Entladungslampen, das folgende Schritte umfasst:

a) Ermitteln einer ersten spektralen Strahlungsleistung ($M_P$) bei einer ersten Wellenlänge (Ap);
b) Ermitteln einer zweiten spektralen Strahlungsleistung ($M_c$) bei einer zweiten, von der ersten verschiedenen Wellenlänge ($\lambda_c$);
c) Bestimmen des Quotienten ($\beta$) aus erster und zweiter Strahlungsleistung; und
d) Bestimmen der Temperatur (T) des Kolbens auf Basis dieses Quotienten,

**dadurch gekennzeichnet, dass** die Temperatur (T) des Kolbens aus folgender Gleichung bestimmt wird:

$$\beta(T) = \beta_0\left[1 + \exp\left(\frac{T_C - R \cdot P - T}{T_0}\right)\right]$$

wobei $\beta_0$, $T_c$, R und $T_0$ lampenspezifische Konstanten, P die elektrische Leistung, T die Lampentemperatur und $\beta$ den Quotienten ($Mp/Mc$) aus erster und zweiter Strahlungsleistung bezeichnet.

2. Verfahren nach Anspruch 1, **dadurch gekennzeichnet, dass** die erste Wellenlänge im Bereich von 539 nm bis 559 nm oder 568 nm bis 588 nm liegt.

3. Verfahren nach Anspruch 1 oder 2, **dadurch gekennzeichnet, dass** die zweite Wellenlänge im Bereich von 470 nm bis 530 nm, insbesondere 470 nm bis 490 nm liegt.

4. Verfahren nach einem der vorherigen Ansprüche, **dadurch gekennzeichnet, dass** die erste und zweite spektrale Strahlungsleistung eine mittlere spektrale Strahlungsleistung ist.

5. Verfahren nach einem der Ansprüche 1 bis 3, **dadurch gekennzeichnet, dass** es die weiteren Schritte umfasst:

   e) Ermitteln einer dritten spektralen Strahlungsleistung ($M_{P,2}$) bei der ersten Wellenlänge ($\lambda_P$) und einer zweiten Temperatur ($T_2$), die sich von derjenigen unterscheidet, bei der die erste spektralen Strahlungsleistung ermittelt wird;
   f) Ermitteln einer vierten spektralen Strahlungsleistung ($M_{C,2}$) bei der zweiten Wellenlänge ($\lambda_C$) und der zweiten Temperatur ($T_2$);
   g) Bestimmen des Quotienten ($\beta_2$) aus dritter und vierter Strahlungsleistung; und
   h) Bestimmen der Temperatur (T) des Kolbens auf Basis des Quotienten ($\beta/\beta_2$) aus dem aus der ersten spektralen Strahlungsleistung ermittelten Quotienten ($\beta$) und dem aus der dritten spektralen Strahlungsleistung ermittelten Quotienten ($\beta_2$).

6. Verfahren nach Anspruch 5, **dadurch gekennzeichnet, dass** die erste, zweite, dritte und vierte spektrale Strahlungsleistung eine mittlere spektrale Strahlungsleistung ist.

7. Verfahren nach Anspruch 5 oder 6, **dadurch gekennzeichnet, dass** die Temperatur (T) des Kolbens aus folgender Gleichung bestimmt wird:

$$\frac{\beta_2}{\beta} = \frac{1 + \exp\left(\dfrac{T_C - R \cdot P_2 - T_2}{T_0}\right)}{1 + \exp\left(\dfrac{T_C - R \cdot P - T}{T_0}\right)} .$$

wobei $T_C$, R und $T_0$ lampenspezifische Konstanten, P die elektrische Leistung bei der zu ermittelnden Temperatur (T) und $P_2$ die elektrische Leistung bei der zweiten Temperatur ($T_2$) bezeichnet.

8. Verfahren nach einem der vorigen Ansprüche, **dadurch gekennzeichnet, dass** die spektralen Strahlungsleistungen mittels Spektrometer ermittelt werden.

9. Verfahren nach einem der Ansprüche 1 bis 7, **dadurch gekennzeichnet, dass** die spektralen Strahlungsleistungen mittels eines Sensors ermittelt werden, dem Bandpaßfilter vorgeschaltet sind, die im wesentlichen nur Licht im Bereich der zugehörigen Wellenlängen durchlassen.

10. Verfahren nach Anspruch 9, **dadurch gekennzeichnet, dass** der Sensor eine Farb-LED als Photoempfänger umfasst.

11. Verfahren nach einem der vorigen Ansprüche, **dadurch gekennzeichnet, dass** ermittelte Quotienten ($\beta$) und zugehörige Temperaturen (T) abgespeichert werden.

12. Verfahren zur Regelung der Kolbentemperatur (T) von Hochdruck-Entladungslampen, das folgende Schritte umfasst:

   Vorgabe einer Kolben-Soll-Temperatur ($T_{Soll}$);
   Bestimmung der Kolben-Ist-Temperatur (T) mittels eines Verfahrens nach einem der vorigen Ansprüche;
   Steuerung wenigstens eines Betriebsparameters der Hochdruck-Entladungslampe so, dass sich die Kolben-Ist-Temperatur der Kolben-Soll-Temperatur annähert.

13. Vorrichtung zur Bestimmung der Kolbentemperatur (T) von Hochdruck-Entladungslampen, das umfasst:

   eine Messeinrichtung zum Ermitteln einer ersten spektralen Strahlungsleistung ($M_P$) bei einer ersten Wellenlänge ($\lambda_P$) und zum Ermitteln einer zweiten spektralen Strahlungsleistung ($M_C$) bei einer zweiten, von der ersten

verschiedenen Wellenlänge ($\lambda_C$);

eine Verarbeitungseinrichtung zum Bestimmen des Quotienten ($\beta$) aus erster und zweiter Strahlungsleistung; und

eine Recheneinrichtung zum Bestimmen der Temperatur (T) des Kolbens auf Basis dieses Quotienten,

**dadurch gekennzeichnet, dass** die Temperatur (T) des Kolbens aus folgender Gleichung bestimmt wird:

$$\beta(T) = \beta_0 \left[ 1 + \exp\left( \frac{T_C - R \cdot P - T}{T_0} \right) \right]$$

wobei $\beta_0$, $T_C$, R und $T_0$ lampenspezifische Konstanten, P die elektrische Leistung, T die Lampentemperatur und $\beta$ den Quotienten ($M_P/M_C$) aus erster und zweiter Strahlungsleistung bezeichnet.

**14.** Vorrichtung nach Anspruch 13, **dadurch gekennzeichnet, dass** die Mess-, Verarbeitungs- und/oder Recheneinrichtung so eingerichtet ist, dass sie nach einem Verfahren nach einem der Ansprüche 1 bis 5 arbeitet.

**15.** Vorrichtung nach Anspruch 13 oder 14, **dadurch gekennzeichnet, dass** die Messeinrichtung auch zum Ermitteln einer dritten spektralen Strahlungsleistung ($M_{P,2}$) bei der ersten Wellenlänge ($\lambda_P$) und einer zweiten Temperatur ($T_2$), die sich von derjenigen unterscheidet, bei der die erste spektralen Strahlungsleistung ermittelt wird, und zum Ermitteln einer vierten spektralen Strahlungsleistung ($M_{C,2}$) bei der zweiten Wellenlänge ($\lambda_C$) und der zweiten Temperatur ($T_2$) eingerichtet ist; dass die Verarbeitungseinrichtung auch zum Bestimmen des Quotienten ($\beta_2$) aus dritter und vierter Strahlungsleistung eingerichtet ist; und dass die Recheneinrichtung die Bestimmung der Temperatur (T) des Kolbens auf Basis des Quotienten ($\beta/\beta_2$) aus dem aus der ersten spektralen Strahlungsleistung ermittelten Quotienten ($\beta$) und dem aus der dritten spektralen Strahlungsleistung ermittelten Quotienten ($\beta_2$) durchführt.

**16.** Vorrichtung nach Anspruch 15, **dadurch gekennzeichnet, dass** die Mess-Verarbeitungs- und/oder Recheneinrichtung so eingerichtet ist, dass sie nach einem Verfahren nach einem der Ansprüche 5 bis 7 arbeitet.

**17.** Vorrichtung nach einem der Ansprüche 13 bis 16, **dadurch gekennzeichnet, dass** die Messeinrichtung ein Spektrometer umfasst.

**18.** Vorrichtung nach einem der Ansprüche 13 bis 16, **dadurch gekennzeichnet, dass** die Messeinrichtung einen Sensors und diesem vorgeschaltete Bandpassfilter umfasst, die im wesentlichen nur Licht im Bereich der zugehörigen Wellenlängen durchlassen.

**19.** Vorrichtung nach Anspruch 18, **dadurch gekennzeichnet, dass** der Sensor eine Farb-LED als Photoempfänger umfasst.

**20.** Vorrichtung nach einem der Ansprüche 13 bis 19, **dadurch gekennzeichnet, dass** sie eine Speichereinrichtung zur Abspeicherung der ermittelten Quotienten ($\beta$) und zugehörigen Temperaturen (T) umfasst.

**21.** Regler für die Kolbentemperatur (T) von Hochdruck-Entladungslampen, der umfasst:

a) Eingabeeinrichtung zur Vorgabe einer Kolben-Soll-Temperatur ($T_{Soll}$);
b) Vorrichtung zur Bestimmung der Kolben-Ist-Temperatur (T) nach einem der Ansprüche 13 bis 20;
c) Steuereinrichtung zur Steuerung wenigstens eines Betriebsparameters der Hochdruck-Entladungslampe so, dass sich die Kolben-Ist-Temperatur der Kolben-Soll-Temperatur annähert.

**Claims**

**1.** Method for determining the bulb temperature (T) of high pressure discharge lamps that comprises the following steps:

a) ascertaining a first spectral radiant power ($M_P$) at a first wavelength ($\lambda_P$) ;
b) ascertaining a second spectral radiant power ($M_C$) at a second wavelength ($\lambda_C$) different from the first;

c) determining the quotient ($\beta$) from the first and second radiant power; and

d) determining the temperature (T) of the bulb on the basis of this quotient,

**characterized in that** the temperature (T) of the bulb is determined from the following equation:

$$\beta(T) = \beta_0\left[1 + \exp\left(\frac{T_C - R \cdot P - T}{T_0}\right)\right]$$

$\beta_0$, $T_C$, R and To designating lamp-specific constants, P the electric power, T the lamp temperature and $\beta$ the quotient ($M_P/M_C$) of the first and second radiant power.

2. Method according to Claim 1, **characterized in that** the first wavelength is in the range from 539 nm to 559 nm or 568 nm to 588 nm.

3. Method according to Claim 1 or 2, **characterized in that** the second wavelength is in the range from 470 nm to 530 nm, in particular 470 nm to 490 nm.

4. Method according to one of the preceding claims, **characterized in that** the first and second spectral radiant power is a mean spectral radiant power.

5. Method according to one of Claims 1 to 3, **characterized in that** it comprises the following steps:

e) ascertaining a third spectral radiant power ($M_{P,2}$) at the first wavelength ($\lambda_P$), and a second temperature ($T_2$), differing from those at which the first spectral radiant power is ascertained;

f) ascertaining a fourth spectral radiant power ($M_{C,2}$) at the second wavelength ($\lambda_C$) and the second temperature ($T_2$);

g) determining the quotient ($\beta_2$) of the third and fourth radiant power; and

h) determining the temperature (T) of the bulb on the basis of the quotient ($\beta/\beta_2$) from the quotient ($\beta$), determined from the first spectral radiant power, and the quotient ($\beta_2$) determined from the third spectral radiant power.

6. Method according to Claim 5, **characterized in that** the first, second, third and fourth spectral radiant power is a mean spectral radiant power.

7. Method according to Claim 5 or 6, **characterized in that** the temperature (T) of the bulb is determined from the following equation:

$$\frac{\beta_2}{\beta} = \frac{1 + \exp\left(\frac{T_C - R \cdot P_2 - T_2}{T_0}\right)}{1 + \exp\left(\frac{T_C - R \cdot P - T}{T_0}\right)}$$

$T_C$, R and $T_0$ designating lamp-specific constants, P the electric power at the temperature (T) to be ascertained, and $P_2$ the electric power at the second temperature ($T_2$).

8. Method according to one of the preceding claims, **characterized in that** the spectral radiant powers are ascertained by means of spectrometers.

9. Method according to one of Claims 1 to 7, **characterized in that** the spectral radiant powers are ascertained by means of a sensor upstream of which there are bandpass filters that essentially pass only light in the range of the associated wavelengths.

10. Method according to Claim 9, **characterized in that** the sensor comprises a color LED as photoreceiver.

**11.** Method according to one of the preceding claims, **characterized in that** ascertained quotients ($\beta$) and associated temperatures (T) are stored.

**12.** Method for controlling the bulb temperature (T) of high pressure discharge lamps that comprises the following steps:

prescribing a desired bulb temperature ($T_{Soll}$);
determining the actual bulb temperature (T) by means of a method according to one of the preceding claims; and
controlling at least one operational parameter of the high pressure discharge lamp such that the actual bulb temperature approaches the desired bulb temperature.

**13.** Apparatus for determining the bulb temperature (T), of high pressure discharge lamps that comprises:

a measuring device for ascertaining a first spectral radiant power ($M_P$) at a first wavelength ($\lambda_P$) and for ascertaining a second spectral radiant power ($M_C$) at a second wavelength ($\lambda_C$) different from the first;
a processing device for determining the quotient ($\beta$) from the first and second radiant power; and
a computing device for determining the temperature (T) of the bulb on the basis of this quotient,

**characterized in that** the temperature (T) of the bulb is determined from the following equation:

$$\beta(T) = \beta_0\left[1 + \exp\left(\frac{T_C - R \cdot P - T}{T_0}\right)\right]$$

$\beta_0$, $T_C$, R and $T_0$ designating lamp-specific constants, P the electric power, T the lamp temperature and $\beta$ the quotient ($M_P/M_C$) of the first and second radiant power.

**14.** Apparatus according to Claim 13, **characterized in that** the measuring, processing and/or computing device is set up such that it operates using a method according to one of Claims 1 to 5.

**15.** Apparatus according to Claim 13 or 14, **characterized in that** the measuring device is also set up for ascertaining a third spectral radiant power ($M_{P, 2}$) at the first wavelength ($\lambda_P$) and a second temperature ($T_2$), different from the first, in which the first spectral radiant power is ascertained, and for ascertaining a fourth spectral radiant power ($M_{C, 2}$) at the second wavelength ($\lambda_C$) and the second temperature ($T_2$) ; **in that** the processing device is also set up for determining the quotient ($\beta_2$) from the third and fourth radiant power; and **in that** the computing device carries out the determination of the temperature (T) of the bulb on the basis of the quotient ($\beta/\beta_2$) of the quotient ($\beta$) ascertained from the first spectral radiant power, and the quotient ($\beta_2$) ascertained from the third spectral radiant power.

**16.** Apparatus according to Claim 15, **characterized in that** the measuring, processing and/or computing device is set up such that it operates using a method according to one of Claims 5 to 7.

**17.** Apparatus according to one of Claims 13 to 16, **characterized in that** the measuring device comprises a spectrometer.

**18.** Apparatus according to one of Claims 13 to 16, **characterized in that** the measuring device comprises a sensor and bandpass filters upstream thereof that pass essentially only light in the range of the associated wavelengths.

**19.** Apparatus according to Claim 18, **characterized in that** the sensor comprises a color LED as photoreceiver.

**20.** Apparatus according to one of Claims 13 to 19, **characterized in that** it comprises a storage device for storing the ascertained quotients ($\beta$) and associated temperatures (T).

**21.** Controller for the bulb temperature (T) of high pressure discharge lamps that comprises:

a) an input device for prescribing a desired bulb temperature ($T_{Soll}$) ;
b) an apparatus for determining the actual bulb temperature (T) according to one of Claims 13 to 20;

c) a control device for controlling at least one operational parameter of the high pressure discharge lamp such that the actual bulb temperature approaches the desired bulb temperature.

**Revendications**

1. Procédé de détermination de la température (T) d'ampoule de lampes à décharge à haute pression qui comprend les stades suivantes :

   a) On détermine une première puissance ($M_p$) spectrale de rayonnement pour une première longueur d'onde ($\lambda_P$) ;
   b) On détermine une deuxième puissance ($M_C$) spectrale de rayonnement pour une deuxième longueur d'onde ($\lambda_C$) différente de la première ;
   c) On détermine le quotient ($\beta$) de la première par la deuxième puissance de rayonnement ; et
   d) On détermine la température (T) de l'ampoule sur la base de ce quotient,

   **caractérisé en ce que** l'on détermine la température (T) de l'ampoule par l'équation suivante :

$$\beta(T) = \beta_0 \left[ 1 + \exp\left( \frac{T_C - R \cdot P - T}{T_0} \right) \right]$$

   dans laquelle $\beta_0$, $T_C$, R et $T_0$ sont des constantes spécifiques à la lampe, P est la puissance électrique, T est la température de la lampe et $\beta$ est le quotient ($M_P/M_C$) de la première puissance de rayonnement par la deuxième puissance de rayonnement.

2. Procédé suivant la revendication 1, **caractérisé en ce que** la première longueur d'onde est comprise entre 539 nm et 559 nm ou entre 568 nm et 588 nm.

3. Procédé suivant la revendication 1 ou 2, **caractérisé en ce que** la deuxième longueur d'onde est comprise entre 470 nm et 530 nm, notamment 470 nm et 490 nm.

4. Procédé suivant l'une des revendications précédentes, **caractérisé en ce que** la première et la deuxième puissances spectrales de rayonnement sont une puissance spectrale de rayonnement moyenne.

5. Procédé suivant l'une des revendications 1 à 3, **caractérisé en ce qu'**il comprend les stades supplémentaire

   e) On détermine une troisième puissance ($M_{P2}$) spectrale de rayonnement à la première longueur d'onde ($\lambda_P$) et à une deuxième température ($T_2$) qui se distingue de celle à laquelle on a déterminé la première puissance spectrale de rayonnement ;
   f) On détermine une quatrième puissance ($M_{C2}$) spectrale de rayonnement pour la deuxième longueur d'onde ($\lambda_C$) et la deuxième température ($T_2$).
   g) On détermine le quotient ($\beta_2$) de la troisième puissance de rayonnement par la quatrième puissance de rayonnement ;
   h) On détermine la température (T) de l'ampoule sur la base du quotient ($\beta/\beta_2$) à partir du quotient ($\beta$) déterminé à partir de la première puissance spectrale de rayonnement et du quotient ($\beta_2$) déterminé à partir de la troisième puissance spectrale de rayonnement.

6. Procédé suivant la revendication 5, **caractérisé en ce que** la première, la deuxième, la troisième et la quatrième puissances spectrales de rayonnement sont des puissances spectrales de rayonnement moyenne.

7. Procédé suivant la revendication 5 ou 6, **caractérisé en ce que** l'on détermine la température (T) de l'ampoule par l'équation suivante :

$$\frac{\beta_2}{\beta} = \frac{1 + \exp\left(\dfrac{T_C - R \cdot P_2 - T_2}{T_0}\right)}{1 + \exp\left(\dfrac{T_C - R \cdot P - T}{T_0}\right)} .$$

dans laquelle $T_C$, R et $T_0$ sont des constantes spécifiques à la lampe, P est la puissance électrique à la température (T) à déterminer et $P_2$ est la puissance électrique à la deuxième température ($T_2$) .

8. Procédé suivant l'une des revendications précédentes, **caractérisé en ce que** l'on détermine les puissances spectrales de rayonnement au moyen d'un spectromètre.

9. Procédé suivant l'une des revendications 1 à 7, **caractérisé en ce que** l'on détermine les puissances spectrales de rayonnement au moyen d'un capteur en amont duquel sont montés des filtres passe-bandes qui sont traversés essentiellement seulement par de la lumière dans le domaine des longueurs d'onde associées.

10. Procédé suivant la revendication 9, **caractérisé en ce que** le capteur comprend une DEL colorée comme photorécepteur.

11. Procédé suivant l'une des revendications précédentes, **caractérisé en ce que** l'on mémorise les quotients (β) déterminés et les températures (T) associées.

12. Procédé de régulation de la température (T) d'ampoule de lampes à décharge à haute pression qui comprend les stades suivants :

On prescrit une température ($T_{Soll}$) de consigne de l'ampoule ;
On détermine la température (T) réelle de l'ampoule au moyen d'un procédé suivant l'une des revendications précédentes ;
On règle au moins un paramètre de fonctionnement de la lampe à décharge à haute pression, de manière à ce que la température réelle de l'ampoule tende vers la température de consigne de l'ampoule.

13. Dispositif de détermination de la température (T) d'ampoule de lampes à décharge à haute pression, qui comprend :

un dispositif de mesure pour déterminer une première puissance ($M_P$) spectrale de rayonnement pour une première longueur d'onde ($\lambda_P$) et pour déterminer une deuxième puissance ($M_C$) spectrale de rayonnement pour une deuxième longueur d'onde ($A_C$) différente de la première ;
un dispositif de traitement pour déterminer le quotient (β) de la première puissance de rayonnement par la deuxième puissance de rayonnement ; et
un dispositif de calcul pour déterminer la température (T) de l'ampoule sur la base de ce quotient ;

**caractérisé en ce que** la température (T) de l'ampoule est déterminée par l'équation suivante :

$$\beta(T) = \beta_0\left[1 + \exp\left(\frac{T_C - R \cdot P - T}{T_0}\right)\right]$$

dans laquelle $\beta_0$ $T_C$, R et $T_0$ sont des constantes spécifiques à la lampe, P est la puissance électrique, T la température de la lampe et β est le quotient ($M_P/M_C$) de la première puissance de rayonnement par la deuxième puissance de rayonnement.

14. Dispositif suivant la revendication 13, **caractérisé en ce que** le dispositif de mesure de traitement et/ou de calcul est tel qu'il fonctionne selon un procédé suivant l'une des revendications 1 à 5.

15. Dispositif suivant la revendication 13 ou 14, **caractérisé en ce que** le dispositif de mesure est conçu aussi pour déterminer une troisième puissance ($M_{P2}$) spectrale de rayonnement pour la première longueur d'onde ($\lambda_P$) à une deuxième température ($T_2$) qui se distingue de celle à laquelle la première puissance spectrale de rayonnement a été déterminée, pour déterminer une quatrième puissance ($M_{C2}$) spectrale de rayonnement pour la deuxième longueur d'onde ($\lambda_C$) et à la deuxième température ($T_2$) ; **en ce que** les dispositifs de traitement sont conçus pour déterminer aussi le quotient ($\beta_2$) de la troisième puissance de rayonnement par la quatrième puissance de rayonnement ; et **en ce que** les dispositifs de calcul effectuent la détermination de la température ($T$) de l'ampoule sur la base du quotient ($\beta/\beta_2$), à partir du quotient ($\beta$) déterminé à partir de la première puissance spectrale de rayonnement et du quotient ($\beta_2$) déterminé à partir de la troisième puissance spectrale de rayonnement.

16. Dispositif suivant la revendication 15, **caractérisé en ce que** le dispositif de mesure de traitement et/ou de calcul est tel qu'il fonctionne selon un procédé suivant l'une des revendications 5 à 7.

17. Dispositif suivant l'une des revendications 13 à 16, **caractérisé en ce que** le dispositif de mesure comprend un spectromètre.

18. Dispositif suivant l'une des revendications 13 à 16, **caractérisé en ce que** le dispositif de mesure comprend un capteur et un filtre passe bande en amont de celui-ci, qui ne laisse passer sensiblement que de la lumière dans le domaine des longueurs d'onde associées.

19. Dispositif suivant la revendication 18, **caractérisé en ce que** le capteur comprend une DEL colorée comme photorécepteur.

20. Dispositif suivant l'une des revendications 13 à 19, **caractérisé en ce qu'**il comprend un dispositif de mémoire pour mémoriser les quotients ($\beta$) déterminés et les températures ($T$) associées.

21. Régulateur de la température ($T$) d'ampoule de lampes à décharge à haute pression qui comprend :

a) Un dispositif d'entrée pour prescrire une température ($T_{Soll}$) de consigne de l'ampoule ;
b) Un dispositif de détermination de la température ($T$) réelle de l'ampoule suivant l'une des revendications 13 à 20 ;
c) Un dispositif de réglage pour régler au moins un paramètre de fonctionnement de la lampe à décharge à haute pression de manière à ce que la température réelle de l'ampoule tende vers la température de consigne de l'ampoule.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4013422
- GB 1265417 A